Europäisches Patentamt

European Patent Office

Office européen des brevets

(19)

(11) **EP 0 879 523 B1**

(12) **FASCICULE DE BREVET EUROPEEN**

(45) Date de publication et mention
de la délivrance du brevet:
**31.03.2004 Bulletin 2004/14**

(21) Numéro de dépôt: **97901117.8**

(22) Date de dépôt: **17.01.1997**

(51) Int Cl.⁷: $H04L\ 27/26$

(86) Numéro de dépôt international:
**PCT/FR1997/000099**

(87) Numéro de publication internationale:
**WO 1997/026742 (24.07.1997 Gazette 1997/32)**

(54) **Procédé et dispositif de synchronisation temporelle d'un récepteur d'un signal multiporteuse**

Verfahren und Apparat für Zeitsynchronisierung in einem Empfänger für ein Mehrträgersignal

Method and apparatus for time synchronisation in a multi-carrier signal receiver

(84) Etats contractants désignés:
**DE ES FI GB IT SE**

(30) Priorité: **18.01.1996 FR 9600766**

(43) Date de publication de la demande:
**25.11.1998 Bulletin 1998/48**

(73) Titulaires:
- **FRANCE TELECOM**
 **75015 Paris (FR)**
- **TELEDIFFUSION DE FRANCE**
 **75732 Paris Cédex 15 (FR)**

(72) Inventeurs:
- **HELARD, Jean-François**
 **F-35700 Rennes (FR)**
- **COMBELLES, Pierre**
 **F-35000 Rennes (FR)**

- **CASTELAIN, Damien**
 **F-35000 Rennes (FR)**

(74) Mandataire: **Vidon, Patrice**
**Cabinet Vidon**
**16 B, rue Jouanet - B.P. 90333**
**Technopole Atalante**
**35703 Rennes Cedex 7 (FR)**

(56) Documents cités:
**EP-A- 0 441 731**       **EP-A- 0 499 560**
**EP-A- 0 656 706**       **EP-A- 0 689 314**

- **COLLOQUE SUR LE TRAITEMENT DU SIGNAL
 ET DES IMAGES, 16 - 20 Septembre 1991, pages
 413-416, XP000242802 LE FLOCH ET AL.:
 "Démodulation cohérente du système de
 transmission multiporteuse COFDM dans un
 canal de radio mobile"**

**Description**

Le domaine de l'invention est celui de la transmission de signaux numériques multiporteuses, c'est-à-dire de signaux mettant en oeuvre une pluralité de sous-porteuses émises simultanément et modulées chacune par des éléments de données distincts. Plus précisément, l'invention concerne la synchronisation temporelle de récepteurs de tels signaux.

Les signaux multiporteuses sont généralement désignés par le terme FDM (Frequency Division Multiplex (multiplex de fréquences)). Un exemple particulier de ces signaux, auquel s'applique notamment l'invention, est les signaux OFDM (Orthogonal Frequency Division Multiplex (multiplexage de fréquences orthogonales)).

Un signal OFDM est par exemple utilisé dans le système de diffusion numérique décrit notamment dans le brevet français FR-A-2 601 210 déposé le 2 juillet 1986 et dans le document "Principes de modulation et de codage canal en radiodiffusion numérique vers les mobiles (M. Alard et R. Lassalle ; Revue de l'UER, n° 224, août 1987, pp. 168-190), et connu sous le nom de système COFDM (Coded Orthogonal Frequency Division Multiplex (multiplexage de fréquences orthogonales codées)).

Ce système COFDM a notamment été développé dans le cadre du projet européen DAB (Digital Audio Broadcasting (diffusion audionumérique)). Il est également candidat à la normalisation pour la diffusion terrestre de la télévision numérique (standard DVB-T notamment). Plus généralement, le système COFDM permet la transmission de tout type de signaux numériques (ou analogiques échantillonnés, mais non nécessairement quantifiés).

Il est basé sur l'utilisation conjointe d'un dispositif de codage de canal et d'un procédé de modulation par multiplexage de fréquences orthogonales. Ce système est particulièrement adapté à la diffusion de signaux numériques de haut débit (quelques mégabits par seconde) dans des canaux affectés de trajets multiples dont les caractéristiques varient dans le temps (réception mobile en milieu urbain).

Le procédé de modulation proprement dit permet de s'affranchir des problèmes liés à la sélectivité en fréquence du canal. Il consiste à répartir l'information à transmettre sur un grand nombre de porteuses juxtaposées et modulées à bas débit. Un système d'entrelacement de l'information à transmettre est associé au procédé de codage, de telle manière que l'indépendance statistique maximale des échantillons soit assurée à l'entrée du décodeur.

La synchronisation temporelle d'un récepteur COFDM consiste à déterminer, dans la trame du signal OFDM reçu, l'emplacement de la partie utile de chaque symbole (constitué d'un intervalle de garde et d'une partie utile) afin d'y appliquer la fenêtre FFT permettant la sélection de la partie utile de chaque symbole. Cette information de synchronisation temporelle est également utilisée pour asservir l'horloge du récepteur afin de mettre en oeuvre le dispositif de récupération de rythme.

Cette fonction de synchronisation temporelle du récepteur se décompose généralement en une synchronisation temporelle grossière (durant la période d'acquisition) et en une synchronisation temporelle fine.

Selon une technique connue, mise en oeuvre notamment dans le programme de diffusion numérique DAB, la synchronisation temporelle peut s'appuyer sur des symboles spéciaux, prévus à cet effet, et généralement placés en début de trame.

Dans ce cas, chaque trame débute avantageusement par au moins deux symboles particuliers S1 et S2, utilisés pour la synchronisation. Elle comprend ensuite un certain nombre de symboles utiles, comprenant chacun une pluralité de porteuses orthogonales modulées.

Le symbole S1 est un symbole nul, permettant d'une part d'effectuer une synchronisation grossière. Le symbole S2 est un second symbole de synchronisation constitué par un multiplex non modulé de toutes les fréquences porteuses, à enveloppe sensiblement constante. Cela permet de recalculer plus précisément la synchronisation par analyse de la réponse impulsionnelle du canal. Le rôle et le mode de réalisation de ces symbole S1 et S2 sont décrits dans le brevet FR-A-2 639 495, déposé le 18.11.88 au nom des mêmes déposants.

Le symbole S2 est également connu sous les noms de symbole CAZAC et symbole TFPC, dans d'autres modes de réalisation.

Il est maintenant envisagé de produire des signaux COFDM ne présentant pas de tels symboles spéciaux dédiés à la synchronisation temporelle. C'est notamment le cas des signaux numériques de télévision en cours de normalisation.

D'autres méthodes de synchronisation doivent donc être développées. On connaît ainsi une technique, dite de corrélation de l'intervalle de garde, qui permet d'effectuer une synchronisation grossière.

L'intervalle de garde d'un symbole OFDM est constitué de la répétition des échantillons de la fin dudit symbole OFDM. La méthode consiste à calculer la corrélation entre les échantillons constituant l'intervalle de garde et les échantillons de la fin du symbole afin d'en extraire un "pic" de corrélation.

Après filtrage temporel, ce "pic" de corrélation peut alors être utilisé comme impulsion de synchronisation pour déterminer la longueur du symbole OFDM et de l'intervalle de garde $\Delta$, et donc le début de la fenêtre FFT. Cette opération est effectuée avant la FFT de démodulation sur le signal COFDM reçu dans le domaine temporel.

Si on appelle x(t) le signal COFDM reçu dans le domaine temporel, la mesure de la corrélation à l'instant $t = T_n$ peut être donnée par l'expression suivante:

$$\Gamma_x(T_n) = \sum_{t=T_n}^{T_n+T_i} \left| x(t).x^*(t-t_s) \right|$$

où * signifie "conjugué" d'un nombre complexe et l l signifie "module" d'un nombre complexe.

La mesure de la corrélation est effectuée sur des blocs de longueur $T_i$ égale, ou inférieure, à la longueur de l'intervalle de garde $\Delta$. Dans le cas où le récepteur ne sait pas a priori quelle est la longueur de l'intervalle de garde (on prévoit, dans certains systèmes, des tailles variables, selon l'application), la mesure de la corrélation peut être faite au départ sur des blocs de longueur égale à la longueur minimale de l'intervalle de garde.

Dans les conditions idéales où il n'y a pas de bruit, pas de multitrajets et pas d'interférences co-canal, le "pic" (ou "impulsion") de corrélation obtenu peut être exploité pour générer la synchronisation temporelle "grossière".

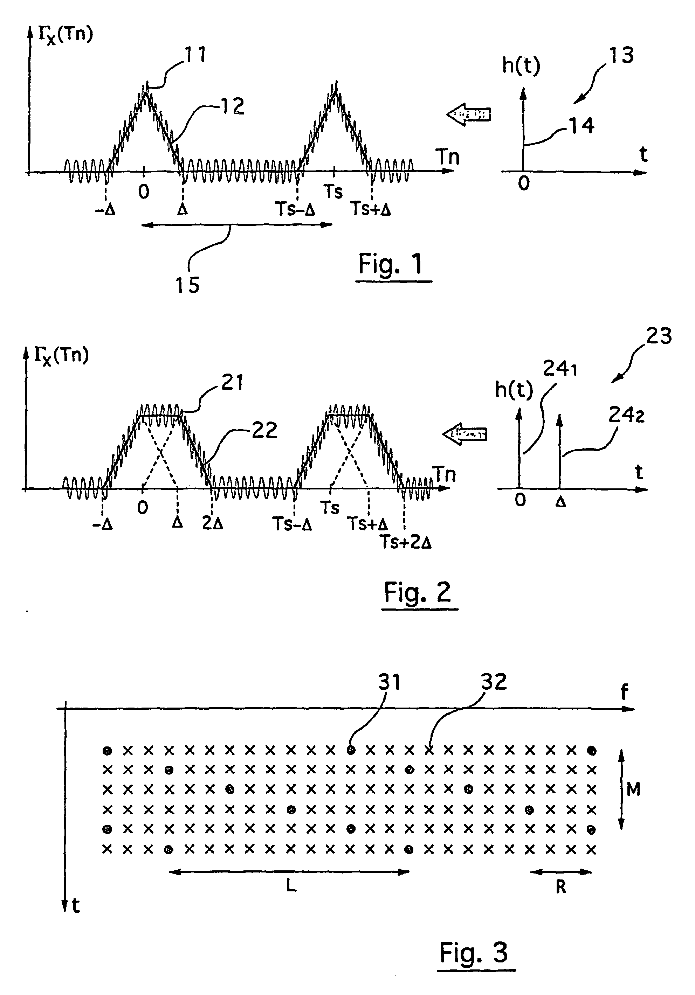

A titre d'exemple, la figure 1 représente la mesure de la corrélation obtenue après filtrage temporel dans le cas d'une transmission idéale bruitée (11) et non bruitée (12) et avec une réponse impulsionnelle h(t) 13 du canal à un seul trajet 14.

Cette information peut être également utilisée pour la synchronisation temporelle fine : en mesurant la distance 15 séparant 2 "pics" de corrélation successifs, on peut déduire la longueur $T_s = t_s + \Delta$ d'un symbole OFDM et donc la longueur de l'intervalle de garde $\Delta$.

En revanche, en présence d'échos importants ou d'un niveau élevé d'interférences, le pic de corrélation obtenu est très déformé et s'étale plus ou moins en fonction de l'étalement des échos.

La figure 2 représente la mesure de la corrélation obtenue après filtrage temporel dans le cas d'une transmission bruitée (21) et non bruitée (22) mais caractérisée par une réponse impulsionnelle h(t) 23 du canal présentant deux trajets $24_1$ et $24_2$ espacés de la longueur de l'intervalle de garde $\Delta$ et reçus avec une puissance identique.

Le pic de corrélation 25 peut alors être exploité pour déterminer quelle est la longueur d'un symbole OFDM et générer la synchronisation temporelle grossière, mais sa précision est insuffisante pour en déduire une synchronisation temporelle fine.

En effet, lorsque les conditions de réception évoluent dans le temps, ce qui est le cas en réception portable et mobile, la forme de la mesure de la corrélation de l'intervalle de garde est très fluctuante. Une synchronisation temporelle fine générée uniquement à partir de cette information, même si cette information est filtrée temporellement, serait alors affectée d'une gigue importante.

De plus, la mesure de la corrélation de l'intervalle de garde sera fortement polluée en présence d'interférences intersymboles dues à la présence d'échos.

L'invention a notamment pour objectif de pallier ces inconvénients de l'état de la technique.

Plus précisément, un objectif de l'invention est de fournir un procédé et un dispositif de synchronisation temporelle pour des récepteurs de signaux multiporteuses ne nécessitant pas l'émission de symboles de synchronisation spécifiques à cette fonction.

Notamment, un objectif de l'invention est de fournir un tel procédé et un tel dispositif, qui soient compatibles avec la structure de signal actuellement proposée pour la diffusion terrestre de la télévision numérique.

Un autre objectif de l'invention est de fournir un tel procédé et un tel dispositif, qui permettent d'effectuer une synchronisation fine de bonne qualité, même en présence d'un signal reçu fortement perturbé. En particulier, l'invention a pour objectif de permettre un fonctionnement correct en présence d'échos longs, et éventuellement supérieurs à la durée de l'intervalle de garde.

Encore un autre objectif de l'invention est de fournir un procédé et un tel dispositif, qui puissent être mis en oeuvre aisément dans tout type de récepteurs, avec une complexité technique et un coût de revient limités.

Ces objectifs, ainsi que d'autres qui apparaîtront par la suite, sont atteints selon l'invention par un procédé de synchronisation temporelle d'un récepteur d'un signal multiporteuse constitué d'une suite de symboles formés chacun d'une pluralité de fréquences porteuses modulées chacune par un coefficient de modulation,

certaines desdites fréquences porteuses, de position dans l'espace temps-fréquence connue dudit récepteur, étant des fréquences porteuses de référence, portant un coefficient de référence de valeur connue dudit récepteur,

procédé comprenant une phase de synchronisation fine comprenant les étapes suivantes :

- estimation de la réponse impulsionnelle $\hat{h}_n$ du canal de transmission dudit signal, à partir de coefficients de référence appartenant à au moins deux symboles reçus ;

- détermination du début de la partie utile de chacun desdits symboles et/ou asservissement d'une horloge du récepteur, par analyse de ladite estimation de la réponse impulsionnelle $\hat{h}_n$.

En d'autres termes, l'invention propose de créer un symbole de synchronisation temporelle fictif, en regroupant plusieurs éléments de référence appartenant à plusieurs symboles. Le symbole fictif ainsi obtenu permet de déterminer une estimation de la réponse impulsionnelle, et d'en déduire une synchronisation fine.

Cette technique est tout à fait nouvelle et inventive pour l'homme du métier, qui a toujours considéré qu'il était nécessaire qu'au moins un symbole particulier de synchronisation soit émis pour déterminer une estimation de la réponse impulsionnelle.

Par ailleurs, elle nécessite des adaptations non évidentes, présentées ci-dessous, lorsque, comme c'est généralement le cas, la réponse impulsionnelle obtenue selon l'invention est sous-échantillonnée.

De façon avantageuse, ladite étape d'estimation de la réponse impulsionnelle $h_n$ comprend les étapes suivantes :

- extraction des coefficients de référence appartenant à M symboles comprenant des porteuses de référence successifs, lesdites porteuses de référence étant séparées par L porteuses utiles dans un même symbole et décalées de R porteuses entre deux symboles comprenant des porteuses de référence successifs, avec M et L supérieurs ou égaux à 2 et R = (L+1)/M ;
- regroupement desdits coefficients de référence extraits, de façon à former un symbole fictif de synchronisation, sous-échantillonné d'un facteur R ;
- transformation inverse de Fourier dudit symbole fictif de synchronisation, de façon à obtenir une estimation de la réponse impulsionnelle $h_n$ s'étendant sur une durée de $t_s/R$, $t_s$ étant la durée utile d'un symbole.

Cette répartition des porteuses de référence (en quinconce) n'est bien sûr qu'un exemple, et de nombreuses autres répartitions peuvent être envisagées. A la limite, les porteuses de référence d'un seul symbole peuvent être utilisées, mais dans ce cas la réponse impulsionnelle est fortement sous-échantillonnée.

Comme mentionné ci-dessus, le sous-échantillonnage introduit, dans certaines situations, des incertitudes sur la correction de synchronisation à apporter (avance ou retard). Pour pallier ce problème, ladite analyse de l'estimation de la réponse impulsionnelle $h_n$ comprend avantageusement les étapes suivantes :

- recherche d'une impulsion représentative du premier trajet du signal dans le canal de transmission ;
- analyse de ladite impulsion représentative du premier trajet, de façon à déterminer s'il s'agit d'un écho ou d'un pré-écho,

et ladite étape de détermination du début de la partie utile de chacun desdits symboles contrôle le positionnement d'une fenêtre temporelle de sélection sur le signal reçu, de façon à positionner ladite impulsion représentative du premier trajet sensiblement à l'instant t = 0 dans ladite estimation de la réponse impulsionnelle $h_n$, ladite fenêtre devant être retardée s'il s'agit d'un écho et avancée s'il s'agit d'un pré-écho.

Préférentiellement, dans ce cas, la plage de temps $[0, t_{max}]$ sur laquelle s'étend ladite estimation de la réponse impulsionnelle $h_n$ est divisée en deux champs :

- un premier champ, dit champ en avance, s'étendant de l'instant 0 à un instant $t_{lim}$, et
- un second champ, dit champ en retard, s'étendant de l'instant $t_{lim}$ à l'instant $t_{max}$,

ladite impulsion représentative du premier trajet étant considérée comme un écho si elle se trouve dans ledit champ en avance, et comme un pré-écho si elle se trouve dans ledit champ en retard.

$t_{lim}$ peut par exemple être choisi supérieur ou égal à la durée Δ de l'intervalle de garde précédant la partie utile de chacun desdits symboles.

De façon préférentielle, le procédé de l'invention comprend également une phase de synchronisation grossière, mise en oeuvre parallèlement à ladite phase de synchronisation fine, et comprenant une étape de corrélation de l'intervalle de garde (connue en soi et décrite en préambule), consistant à rechercher un pic de corrélation entre le contenu d'un intervalle de garde précédant la partie utile de chacun desdits symboles et la fin de la partie utile dudit symbole, de façon à déterminer la durée dudit symbole.

Outre la synchronisation grossière, la corrélation de l'intervalle de garde peut être utilisée d'une façon nouvelle pour améliorer encore la synchronisation fine de l'invention, dans certains cas particuliers.

En effet, avantageusement, le procédé comprend alors une étape de distinction entre un écho long et un pré-écho, lorsque ladite impulsion représentative du premier trajet se trouve dans ledit champ en retard, par analyse de la mesure de la corrélation de l'intervalle de garde, consistant à déterminer le nombre d'échantillons de ladite mesure de la corrélation supérieur à un seuil de décision, ladite impulsion représentative du premier trajet étant considérée comme un écho long lorsque ledit nombre d'échantillons est supérieur à une valeur prédéterminée.

Cette technique permet de lever l'incertitude de certains cas limites entre un écho très long et un pré-écho.

Avantageusement, ledit seuil de décision est sensiblement proportionnel à l'amplitude la plus faible parmi les deux amplitudes correspondant à l'impulsion la plus élevée de chacun desdits champs "en avance" et "en retard".

L'invention concerne également les dispositifs mettant en oeuvre le procédé décrit ci-dessus. Un tel dispositif de synchronisation temporelle d'un récepteur d'un signal multiporteuse comprend des moyens de synchronisation fine comprenant :

- des moyens d'estimation de la réponse impulsionnelle $h_n$ du canal de transmission dudit signal, à partir de coefficients de référence appartenant à au moins deux symboles reçus ;
- des moyens de détermination du début de la partie utile de chacun desdits symboles, par analyse de ladite estimation de la réponse impulsionnelle $h_n$.

D'autres caractéristiques et avantages de l'invention apparaîtront à la lecture de la description suivante d'un mode de réalisation préférentiel de l'invention, donné à titre de simple exemple illustratif et non limitatif, et des dessins annexés parmi lesquels :

- les figures 1 et 2 illustrent le principe de la technique connue de synchronisation grossière par corrélation de l'intervalle de garde, déjà commentée en préambule, dans les cas où la réponse impulsionnelle du canal de transmission présente respectivement un seul trajet et deux trajets ;
- la figure 3 présente un exemple de répartition de porteuses de référence dans l'espace temps-fréquence ;
- la figure 4 illustre un exemple d'estimation de la réponse impulsionnelle du canal de transmission obtenue à partir des éléments de référence de la figure 3, selon le procédé de l'invention ;
- les figures 5A et 5B présentent deux exemples d'estimation de la réponse impulsionnelle susceptibles d'être rencontrés selon l'invention, et correspondant respectivement à un pré-écho et à un écho ;
- les figures 6A et 6B illustrent une méthode de différenciation entre un pré-écho (figure 6A) et un écho long (figure 6B), à l'aide de la mesure de corrélation de l'intervalle de garde ;
- la figure 7 est un schéma synoptique d'un dispositif d'acquisition de la synchronisation temporelle selon l'invention.

L'invention s'applique à l'acquisition de la synchronisation temporelle dans les récepteurs de signaux COFDM n'incluant pas de symboles dédiés de synchronisation. Le mode de réalisation préférentiel décrit ci-dessous s'applique notamment aux récepteurs de signaux de télévision numérique selon la norme DVB-T.

Avant de décrire en détail l'invention, on rappelle brièvement les caractéristiques principales du signal émis.

Le signal émis est constitué par une suite de symboles de modulation formant un multiplex de N porteuses orthogonales.

Soit $\{f_k\}$ l'ensemble des fréquences porteuses considérées avec :

$$f_k = k/t_s,\ k = 0\ \text{à}\ N - 1$$

où ts représente la durée allouée à un symbole de modulation.

On définit alors une base de signaux élémentaires

$\psi_{j,t}(t)$ avec $k = 0$ à $N - 1$, $j = -\infty$ à $+\infty$ ;

$$\psi_{j,t}(t) = g_k\ (t - jt_s)$$

avec :

$0 \le t \le t_s$ : $\quad g_k\ (t) = e^{\ 2i\pi f_k t}$
ailleurs : $\quad g_k\ (t) = 0$

Soit alors un ensemble de nombres complexes $\{C_{j,k}\}$ prenant ses valeurs dans un alphabet fini.

Le signal OFDM associé s'écrit :

$$x(t) = \mathrm{Re}\left[ e^{2i\pi f0}\left( \sum_{j=-\infty}^{+\infty} \sum_{k=0}^{N-1} C_{j,k}\cdot\Psi_{j,k}(t) \right) \right]$$

où f0 est la fréquence porteuse du multiplex COFDM.

Pour s'affranchir de tout problème de sélectivité en fréquence du canal, un intervalle de garde du durée $\Delta$ est inséré devant chaque signal $\psi_{j,t}(t)$, afin d'absorber le brouillage intersymboles.

ts représente désormais la durée du signal utile, $\Delta$ la durée de l'intervalle de garde et Ts = ts + $\Delta$, la durée du symbole.

On définit alors les signaux émis par la relation :

$$\psi_{j,t}(t) = g_k\ (t - jT_s)$$

avec

$-\Delta \le t < t_s$ : $\quad g_k\ (t) = e^{\ 2i\pi f_k t}$
ailleurs : $\quad g_k\ (t) = 0$

Le canal est modélisé par la relation :

$$Y_{j,k} = H_{j,k}\ C_{j,k} + N_{j,k}$$

où :

$H_{j,k}$    est la réponse complexe du canal à la fréquence $f_k$ et à l'instant jTs.

$N_{j,k}$    est un bruit gaussien complexe.

$Y_{j,k}$    est le symbole obtenu après projection du signal COFDM reçu sur chaque porteuse k et à chaque instant j.

Le couple (j,k) définit ce qu'on appelle une cellule, c'est-à-dire une porteuse (k) pendant un temps symbole (j).

En réception, pour mettre en oeuvre la démodulation cohérente du multiplex OFDM, il est nécessaire d'estimer la réponse du canal en phase et en amplitude à tout instant et pour toutes les fréquences du multiplex. Dans ce but, le signal COFDM comprend certaines porteuses dites de référence, judicieusement réparties dans le domaine temps-fréquence.

Cette technique est notamment décrite dans le brevet FR-A-2 658 016, au nom des mêmes déposants que la présente demande de brevet.

L'invention propose d'utiliser également ces porteuses de référence dans un autre but, à savoir la synchronisation temporelle.

Lors de la transmission, le canal peut être modélisé par la relation :

$$Y_{j,k} = H_{j,k} \, C_{j,k} + N_{j,k}$$

où

$H_{j,k}$ est la réponse complexe du canal à la fréquence $f_k$ et à l'instant $jTs$,

$N_{j,k}$ est un bruit gaussien complexe,

$Y_{j,k}$ est l'échantillon obtenu pour chaque porteuse k et à chaque instant jTs après la Transformée de Fourier de démodulation du signal COFDM.

Le dispositif de récupération de porteuse utilisé en démodulation cohérente doit pouvoir fournir une estimation de la réponse du canal:

$$H_{j,k} = \rho_{j,k} \, e^{i\varphi}j,k$$

pour tous les symboles j et toutes les fréquences k.

Pour cela, le signal COFDM comporte donc certaines porteuses de référence, judicieusement réparties dans le domaine temps-fréquence, qui sont utilisées comme fréquences pilotes de référence de phase et d'amplitude. A partir des échantillons $Y_{j,k}$ (obtenus en sortie de la Transformée de Fourier) et connaissant les symboles $C_{j,k}$ ayant modulées les porteuses de référence, il est possible d'obtenir une estimation des quantités $H_{j,k}$ correspondant auxdites porteuses de référence en remarquant que :

$$H_{j,k} = Y_{j,k} \cdot \frac{C_{j,k}^*}{|C_{j,k}|^2}$$

Un exemple de répartition dans l'espace temps-fréquence des porteuses de référence disposées en quinconce est représenté sur la figure 3.

Sur cette figure, les porteuses pilotes de référence 31 sont représentées par des points, et les porteuses utiles 32 (portant des données utiles) sont représentées par des croix.

Dans cet exemple, on note que :

- dans un même symbole, deux porteuses de référence consécutives sont séparées par L = 11 porteuses utiles ;
- la première porteuse de référence d'un symbole donné est décalée de R = 3 porteuses, par rapport au symbole précédent (modulo 12) ;
- en conséquence, le même motif se présente tous les M = (L+1)/R = 4 symboles.

En regroupant plusieurs symboles OFDM comportant des porteuses de référence disposées en quinconce à raison d'une toutes les R porteuses, on peut former un symbole fictif comprenant N/R éléments de référence, connus du récepteur. Il est alors possible, comme proposé selon l'invention, d'obtenir une estimation entachée de bruit de la réponse fréquentielle sous-échantillonnée du canal représentée par:

$H_k$ pour k = n.R, n: 0....(N/R)-1

Pour le cas représenté sur la figure 3, on peut vérifier qu'en regroupant M = 4 symboles consécutifs, on obtient une estimation des N/3 quantités $H_k$ pour k = 3n, représentant une réponse fréquentielle du canal sous-échantillonnée d'un rapport 3.

Il est alors possible, à partir de cette estimation de la réponse fréquentielle sous-échantillonnée du canal, d'obtenir en appliquant une Transformée de Fourier Discrète inverse sur N/R points, une estimation de la réponse impulsionnelle $\hat{h}_n$ du canal. Cette estimation $\hat{h}_n$ de la réponse impulsionnelle du canal, représentée sur N/R échantillons, a un horizon de ts/R.

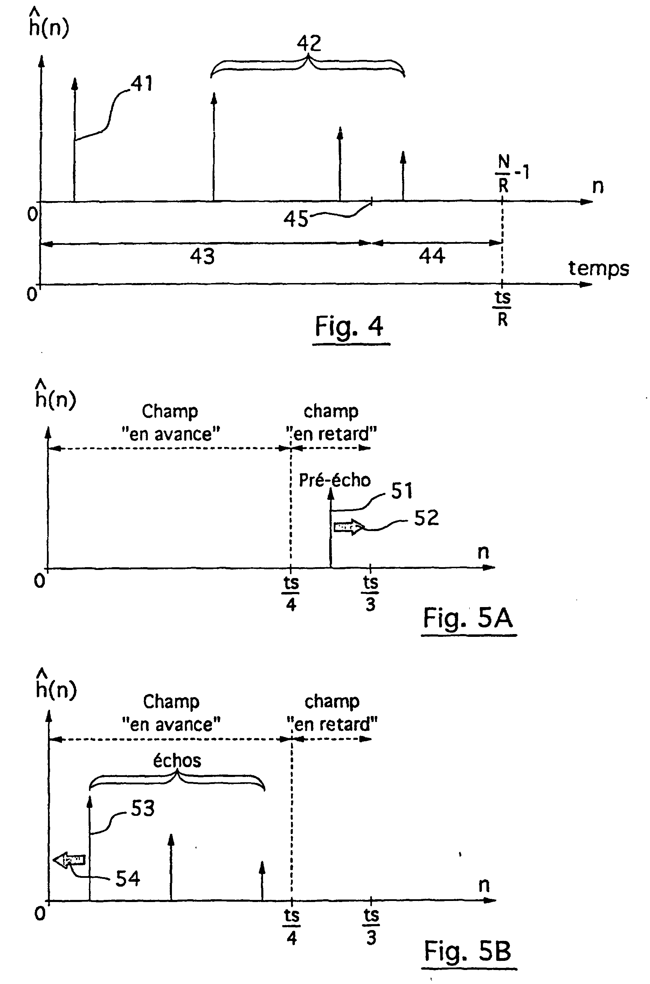

Un exemple d'une telle estimation est représenté en figure 4. Cette estimation comprend (après seuillage) 4 pics, un premier pic 41 correspondant au premier trajet, ou chemin, reçu (trajet direct en général) du canal de transmission, et des pics 42 correspondant aux trajets secondaires de ce canal.

L'analyse de cette réponse $\hat{h}_n$ permet de déterminer l'emplacement de la partie utile de chaque symbole dans la trame du signal COFDM reçu, afin d'y appliquer la fenêtre FFT. Une synchronisation temporelle fine est ainsi générée.

Cette analyse consiste à déterminer quelle est la première impulsion de la réponse $\hat{h}_n$ correspondant au premier chemin reçu qu'il est nécessaire de prendre en compte. Ceci est effectué simplement en comparant l'amplitude des différents échantillons de l'estimation de la réponse $\hat{h}_n$ à un seuil, puis en déterminant quelle est la première impulsion significative correspondant au premier chemin reçu.

Pour cela, on partage l'horizon (égal à $t_s/R$) de la réponse impulsionnelle du canal en deux champs (un champ "en avance" 43 et un champ "en retard" 44) pour décider si la fenêtre FFT est, au vu de l'analyse, en avance ou en retard par rapport à la position idéale.

Par exemple, pour le cas représenté sur la figure 3, l'horizon de l'estimation $\hat{h}_n$ de la réponse impul-

sionnelle est égal à $t_s/3$. Si on considère que la valeur maximale de l'intervalle de garde $\Delta$ est égale à $t_s/4$, la frontière 45 délimitant les deux champs pourrait être choisie égale à $t_s/4$.

Ainsi, en se référant à la figure 5A, cela veut dire qu'une impulsion 51 de valeur supérieure au seuil d'amplitude située entre $t_s/4$ et $t_s/3$ serait considérée non pas comme un écho mais comme un pré-écho. Cette impulsion 51 correspondant au premier chemin reçu, il faudra donc avancer (52) la fenêtre FFT afin de "l'aligner" sur ce premier trajet.

En revanche, si la première impulsion significative 53, c'est-à-dire supérieure au seuil, est située entre 0 et $t_s/4$, il faudra retarder (54) la fenêtre FFT afin de l'aligner sur ce premier trajet, ainsi que cela est illustré en figure 5B).

La méthode de l'invention, utilisant cette analyse de la réponse impulsionnelle obtenue à partir des porteuses pilotes, est dans beaucoup de cas satisfaisante pour générer une synchronisation temporelle fine. Cependant, en présence d'un écho très long, elle présente un inconvénient lorsqu'elle est utilisée isolément.

Pour décrire cet inconvénient, on se réfère à l'exemple de la figure 3, caractérisé par un horizon de la réponse impulsionnelle égal à $t_s/3$, la frontière séparant les deux champs "avance" et "retard" étant située à $t_s/4$.

Dans le cas d'un écho long de retard supérieur à $t_s/4$ et inférieur à $t_s/3$, l'estimation $h_n$ comportera une impulsion située entre $t_s/4$ et $t_s/3$. Cette impulsion sera alors considérée (cf. figure 5A) par erreur par le récepteur non pas comme un écho mais comme un pré-écho. Le récepteur alignera la fenêtre FFT sur ce qu'il croit être le premier trajet, ce qui dégradera fortement les performances. Le récepteur sera alors mal synchronisé temporellement.

Pour éviter ce genre de situation, il est proposé d'utiliser simultanément la méthode de l'invention et la méthode de corrélation de l'intervalle de garde déjà décrite, qui s'avèrent être complémentaires.

Le problème rencontré avec la méthode de l'invention et décrit ci-dessus résulte du fait que le récepteur ne sait pas, en analysant la réponse impulsionnelle, faire la différence entre un écho long (supérieur à la frontière séparant les deux champs "avance" et "retard") et un pré-écho.

Pour lever cette ambiguïté, il est proposé d'analyser la mesure de la corrélation de l'intervalle de garde.

On a vu précédemment que l'évaluation de la distance séparant deux "pics" successifs de la mesure de la corrélation de l'intervalle de garde permet de déterminer la longueur $T_s = t_s + \Delta$ d'un symbole OFDM et donc la longueur $\Delta$ de l'intervalle de garde.

De plus, l'étalement de la mesure de cette corrélation dépend directement de l'étalement des trajets. Ceci est bien mis en évidence par la comparaison des deux figures 1 et 2 représentant la mesure de la corrélation obtenue avec respectivement un et deux trajets espacés de $\Delta$. Il est donc possible, en comptant le nombre d'échantillons dépassant un seuil donné, d'évaluer l'étalement des échos et donc différencier un pré-écho et un écho long.

On considère toujours l'exemple de répartition des porteuses de référence de la figure 3 permettant d'obtenir une estimation de la réponse impulsionnelle du canal sur un horizon de $t_s/3$.

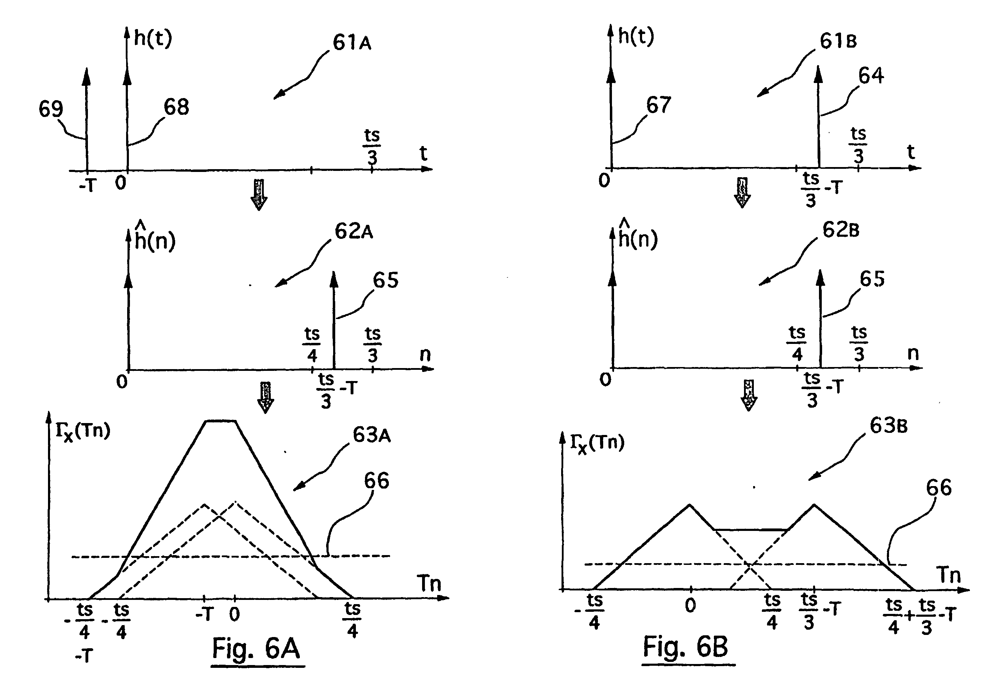

Les figures 6A et 6B représentent la réponse impulsionnelle h(t) $61_i$ du canal, l'estimation $h_n$ $62_i$ calculée par le récepteur de cette réponse, et la mesure de la corrélation de l'intervalle de garde $63_i$ pour les deux cas suivants :

-  figure 6A : apparition d'un pré-écho 69 en -T, le récepteur étant initialement bien synchronisé sur l'unique trajet 68 existant en t = 0 ; les deux trajets sont reçus avec une puissance identique, la transmission est non bruitée ;
-  figure 6B : apparition d'un écho long 64 de retard $t_s/3 - T$, le récepteur étant également initialement bien synchronisé sur l'unique trajet 67 existant en t = 0 ; les deux trajets sont reçus avec une puissance identique, la transmission est non bruitée.

La mesure de la corrélation de l'intervalle de garde est effectuée sur des blocs de longueur $T_i = t_s/4$. Dans les deux cas, l'estimation $h_n$ $62_A$ et $62_B$ calculée par le récepteur de la réponse impulsionnelle du canal est identique, avec un pic 65 à $t_s/3 - T$.

En revanche, la mesure de la corrélation de l'intervalle de garde est beaucoup plus étalée ($63_B$) dans le cas de l'écho long 64 que ($63_A$) dans le cas du pré-écho 69.

En comptant le nombre d'échantillons de cette mesure dépassant un seuil de décision donné 66 (ou le rapport du nombre d'échantillons supérieur à ce seuil sur le nombre d'échantillons inférieurs au seuil), il est donc possible de lever l'ambiguïté et de différencier un pré-écho d'un écho long.

Le niveau de ce seuil de décision 66 peut avantageusement être fixé de la façon suivante. Le but est de distinguer dans la zone "d'incertitude" un pré-écho d'un écho long. Dans le cas discuté précédemment, cette zone d'incertitude est situé entre $t_s/4$ et $t_s/3$.

Pour cela, on cherche à évaluer l'écart temporel réel entre deux impulsions significatives situées respectivement dans le premier champ 43 ("en avance") et dans le second champ 44 ("en retard", ou encore "zone d'incertitude").

On peut notamment évaluer quelle est l'amplitude de la plus grande impulsion dans chacun des deux champs 43 et 44. Afin d'être sûr de bien prendre en compte les contributions de ces deux principaux trajets, le niveau du seuil de décision peut être alors fonction de l'amplitude la plus faible de ces deux impulsions maximales. Ainsi, lorsque l'amplitude maximale des impulsions situées dans la zone d'incertitude est faible, le niveau de décision appliqué à la corrélation de l'intervalle de garde sera abaissé, et il sera possible de différencier sans ambiguïté un pré-écho d'un écho long.

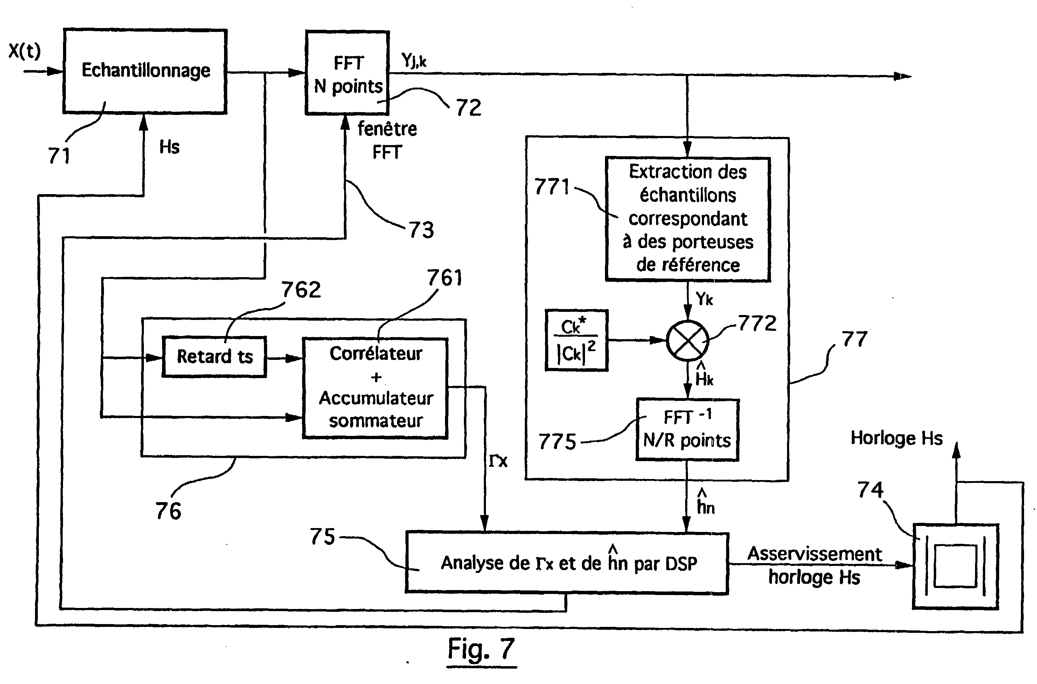

La figure 7 est un schéma simplifié d'un dispositif selon l'invention, mettant en oeuvre les différents aspects discutés ci-dessus.

Le signal reçu x(t) est échantillonné (71), à la fréquence $H_s$, puis transformé dans l'espace des fréquences, à l'aide d'une FFT 72 à N points, pour fournir le signal $Y_{j,k} = H_{j,k}.C_{j,k} + N_{j,k}$ à la suite de la chaîne de traitement.

L'invention à pour but de positionner correctement la fenêtre FFT 73, afin de sélectionner la partie utile de chaque symbole, et d'asservir l'horloge $H_s$ 74 du récepteur.

Pour cela, le dispositif comprend des moyens 75 de traitement du signal, alimentés d'une part par des moyens 76 de mesure de la corrélation de l'intervalle de garde, et d'autre part par des moyens 77 de calcul de l'estimation de la réponse impulsionnelle.

Les moyens 76 de mesure de la corrélation de l'intervalle de garde comprennent un corrélateur-accumulateur-sommateur 761, alimenté d'une part par le signal échantillonné x(t), et d'autre part par le même signal x(t), retardé (762) de la durée $t_s$.

Les moyens 77 de calcul de l'estimation de la réponse impulsionnelle comprennent des moyens 771 de reconstitution d'un symbole fictif de synchronisation, par extraction et regroupement des échantillons correspondant à des porteuses de référence, fournissant un symbole sous-échantillonné $Y_k = = H_k.C_k + N_k$ (N/R échantillons). Ce symbole fictif est normalisé par multiplication 772 par $C^*_k/ IC^2_kI$, puis soumis à une transformation de Fourier inverse 773 sur N/R points, pour fournir l'estimation de la réponse impulsionnelle $h_n$.

Les moyens 75 de traitement effectuent alors :

- une synchronisation grossière, à l'aide de la mesure de corrélation de l'intervalle de garde ; et
- une synchronisation fine, à l'aide de l'estimation de la réponse impulsionnelle $h_n$, selon l'invention, et en tenant compte de la mesure de corrélation de l'intervalle de garde si nécessaire, ainsi que décrit précédemment.

## Revendications

**1.** Procédé de synchronisation temporelle d'un récepteur d'un signal muitiporteuse constitué d'une suite de symboles formés chacun d'une pluralité de fréquences porteuses modulées chacune par un coefficient de modulation,
certaines desdites fréquences porteuses, de position dans l'espace temps-fréquence connue dudit récepteur, étant des fréquences porteuses de référence, portant un coefficient de référence de valeur connue dudit récepteur,
**caractérisé en ce qu'**il comprend une phase de synchronisation fine comprenant les étapes suivantes :

- estimation (773) de la réponse impulsionnelle $h_n$ du canal de transmission dudit signal, à partir de coefficients de référence appartenant à au moins deux symboles reçus ;
- détermination (75) du début de la partie utile de chacun desdits symboles et/ou asservissement d'une horloge du récepteur, par analyse de ladite estimation de la réponse impulsionnelle $h_n$.

**2.** Procédé selon la revendication 1, **caractérisé en ce que** ladite étape d'estimation de la réponse impulsionnelle $h_n$ comprend les étapes suivantes :

- extraction (771) des coefficients de référence appartenant à M symboles comprenant des porteuses de référence successifs, lesdites porteuses de référence étant séparées par L porteuses utiles dans un même symbole et décalées de R porteuses entre deux symboles comprenant des porteuses de référence successifs, avec M et L supérieurs ou égaux à 2 et R = (L+1)/M ;
- regroupement (771) desdits coefficients de référence extraits, de façon à former un symbole fictif de synchronisation, sous-échantillonné d'un facteur R ;
- transformation de Fourier inverse (773) dudit symbole fictif de synchronisation, de façon à obtenir une estimation de la réponse impulsionnelle $h_n$ s'étendant sur une durée de $t_s/R$, $t_s$ étant la durée utile d'un symbole.

**3.** Procédé selon l'une quelconque des revendications 1 et 2, **caractérisé en ce que** ladite analyse de l'estimation de la réponse impulsionnelle $h_n$ comprend les étapes suivantes :

- recherche d'une impulsion (41, 51, 53) représentative du premier trajet du signal dans le canal de transmission ;
- analyse de ladite impulsion représentative du premier trajet, de façon à déterminer s'il s'agit d'un écho (53) ou d'un pré-écho (51),

et **en ce que** ladite étape de détermination du début de la partie utile de chacun desdits symboles contrôle le positionnement d'une fenêtre temporelle (73) de sélection sur le signal reçu, de façon à positionner ladite impulsion représentative du premier trajet sensiblement à l'instant t = 0 dans ladite estimation de la réponse impulsionnelle $h_n$, ladite fenêtre devant être retardée s'il s'agit d'un écho et avancée s'il s'agit d'un pré-écho.

**4.** Procédé selon la revendication 3, **caractérisé en ce que** la plage de temps [0, $t_{max}$] sur laquelle s'étend ladite estimation de la réponse impulsionnelle $h_n$ est divisée en deux champs :

- un premier champ (43), dit champ en avance, s'étendant de l'instant 0 à un instant $t_{lim}$, et
- un second champ (44), dit champ en retard, s'étendant de l'instant $t_{lim}$ à l'instant $t_{max}$,

ladite impulsion représentative du premier trajet étant considérée comme un écho si elle se trouve dans ledit champ en avance, et comme un pré-écho si elle se trouve dans ledit champ en retard.

**5.** Procédé selon la revendication 5, **caractérisé en ce que** $t_{lim}$ est supérieur ou égal à la durée $\Delta$ de l'intervalle de garde précédant la partie utile de chacun desdits symboles.

**6.** Procédé selon l'une quelconque des revendications 1 à 5, **caractérisé en ce qu'**il comprend une phase de synchronisation grossière (76), mise en oeuvre parallèlement à ladite phase de synchronisation fine, comprenant une étape de corrélation de l'intervalle de garde, consistant à rechercher un pic de corrélation entre le contenu d'un intervalle de garde précédent la partie utile de chacun desdits symboles et la fin de la partie utile dudit symbole, de façon à déterminer la durée dudit symbole.

**7.** Procédé selon les revendications 4 et 6, **caractérisé en ce qu'**il comprend une étape de distinction entre un écho long et un pré-écho, lorsque ladite impulsion représentative du premier trajet se trouve dans ledit champ en retard, par analyse de la mesure ($63_i$) de la corrélation de l'intervalle de garde, consistant à déterminer le nombre d'échantillons de ladite mesure de la corrélation supérieur à un seuil de décision (66), ladite impulsion représentative du premier trajet étant considérée comme un écho long lorsque ledit nombre d'échantillons est supérieur à une valeur prédéterminée.

**8.** Procédé selon la revendication 7, **caractérisé en ce que** ledit seuil de décision (66) est sensiblement proportionnel à l'amplitude la plus faible parmi les deux amplitudes correspondant à l'impulsion la plus élevée de chacun desdits champs "en avance" et "en retard".

**9.** Dispositif de synchronisation temporelle d'un récepteur d'un signal multiporteuse constitué d'une suite de symboles formés chacun d'une pluralité de fréquences porteuses modulées chacune par un coefficient de modulation,

certaines desdites fréquences porteuses, de position dans l'espace temps-fréquence connue dudit récepteur, étant des fréquences porteuses de référence, portant un coefficient de référence de valeur connue dudit récepteur,

**caractérisé en ce qu'**il comprend des moyens de synchronisation fine comprenant :

- des moyens (773) d'estimation de la réponse impulsionnelle $h_n$ du canal de transmission dudit signal, à partir de coefficients de référence appartenant à au moins deux symboles reçus ;
- des moyens (75) de détermination du début de la partie utile de chacun desdits symboles, par analyse de ladite estimation de la réponse impulsionnelle $h_n$.

**Claims**

**1.** Process for the temporal synchronisation of a receiver of a multicarrier signal consisting of a sequence of symbols each formed by a plurality of carrier frequencies, each modulated by a modulation coefficient,

certain of said carrier frequencies of a position in the time-frequency space known to said receiver, being reference carrier frequencies bearing a reference coefficient with a value known to said receiver, **characterised in that** it comprises a fine synchronisation phase comprising the following steps:

- estimation (773) of the pulse response $\hat{h}_n$ of the transmission channel of said signal from reference coefficients belonging to at least two received symbols;
- determination (75) of the beginning of the useful part of each of said symbols and/or control of a clock of the receiver by analysis of said estimate of the pulse response $\hat{h}_n$.

**2.** Process according to claim 1, **characterised in that** said step of estimating the pulse response $\hat{h}_n$ comprises the following steps:

- extraction (771) of the reference coefficients belonging to M symbols comprising successive reference carriers, said reference carriers being separated by L useful carriers in the same symbol and being offset by R carriers between two symbols comprising successive reference carriers, with M and L greater than or equal to 2 and R =(L+1)/M;
- grouping together (771) of said extracted reference coefficients so as to form a fictitious synchronisation symbol sub-sampled by a factor R;
- reverse Fourier transformation (773) of said fictitious synchronisation symbol so as to obtain an estimate of the pulse response $\hat{h}_n$ extending over a duration $t_s/R$, $t_s$ being the useful period of a symbol.

3. Process according to one of claims 1 and 2, **characterised in that** said analysis of the estimate of the pulse response $h_n$ comprises the following steps:

   - search for a pulse (41, 51, 53)representing the first path of the signal in the transmission channel;
   - analysis of said pulse representing the first path so as to determine whether it is an echo (53) or a pre-echo (51),

   and **in that** said step for determining the start of the useful part of each of said symbols checks the position of a temporal selection window (73) on the received signal, so as to position said pulse representing the first path substantially at the instant t=0 in said estimate of the pulse response $h_n$, said window having to be delayed if it is an echo and advanced if it is a pre-echo.

4. Process according to claim 3, **characterised in that** the time range [0, $t_{max}$] over which extends said estimate of the pulse response $h_n$ is divided into two fields:

   - a first field (43), called advanced field, extending from the instant 0 to an instant $t_{lim}$, and
   - a second field (44), called delayed field, extending from the instant $t_{lim}$ to the instant $t_{max}$,

   said pulse representing the first path being considered to be an echo if it lies in said advanced field and a pre-echo if it lies in said delayed field.

5. Process according to claim 5, **characterised in that** $t_{lim}$ is greater than or equal to the duration $\Delta$ of the guard interval preceding the useful part of each of said symbols.

6. Process according to any of claims 1 to 5, **characterised in that** it comprises a rough synchronisation phase (76) implemented in parallel to said fine synchronisation phase and comprising a step for the correlation of the guard interval, consisting of a search for a correlation peak between the content of a guard interval preceding the useful part of each of said symbols and the end of the useful part of said symbol, so as to determine the duration of said symbol.

7. Process according to claims 4 and 6, **characterised in that** it comprises a step for distinguishing between a . long echo and a pre-echo, when said pulse representing the first path lies in said delayed field, by analysis of the measurement ($63_i$) of the guard interval correlation, consisting of determining the number of samples of said correlation measurement greater than a decision threshold (66), said pulse representing the first path being considered as a long echo when said number of samples is greater than a predetermined value.

8. Process according to claim 7, **characterised in that** the decision threshold (66) is approximately proportional to the smallest amplitude of the two amplitudes corresponding to the highest pulse of each of said "advanced" and "delayed" fields.

9. Device for temporal synchronisation of a receiver of a multicarrier signal consisting of a sequence of symbols each formed by a plurality of carrier frequencies, each modulated by a modulation coefficient,
   certain of said carrier frequencies of a position in the time-frequency space known to said receiver, being reference carrier frequencies bearing a reference coefficient with a value known to said receiver, **characterised in that** it comprises means for fine synchronisation comprising:

   - means (773) for estimating the pulse response $h_n$ of the transmission channel of said signal from reference coefficients belonging to at least two received symbols;
   - means (75) for determining the beginning of the useful part of each of said symbols by analysis of said estimate of the pulse response $h_n$.

**Patentansprüche**

1. Verfahren zur zeitlichen Synchronisation in einem Empfänger für ein Mehrfachträgersignal, bestehend aus einer Folge von Symbolen, die jeweils von einer Vielzahl von Trägerfrequenzen gebildet sind, von der eine jede durch einen Modulationskoeffizienten moduliert wird,
   wobei einige dieser Trägerfrequenzen, deren Position im Zeit-Frequenz-Raum vom Empfänger bekannt ist, Referenzträgerfrequenzen sind, die einen Referenzkoeffizienten tragen, dessen Wert vom Empfänger bekannt ist,
   **dadurch gekennzeichnet, dass** es eine Feinsynchronisierungsphase mit den folgenden Schritten umfasst:

   - Schätzung (773) der Impulsantwort $\hat{h}_n$ des Sendekanals für das besagte Signal, ausgehend von Referenzkoeffizienten, die mindestens zu zwei empfangenen Symbolen gehören;

- Feststellung (75) des Anfangs des nützlichen Teils eines jeden dieser Symbole und/oder Rückkopplung eines Taktgebers des Empfängers durch Analyse der Schätzung der Impulsantwort $h_n$.

2. Verfahren nach Anspruch 1, **dadurch gekennzeichnet, dass** der Schritt zum Schätzen der Impulsantwort $h_n$ die folgenden Schritte umfasst:

   - Extraktion (771) der M Symbolen angehörenden Referenzkoeffizienten, welche aufeinander folgende Referenzträgerfrequenzen enthalten, wobei diese Referenzträgerfrequenzen durch L im selben Symbol nützliche Trägerfrequenzen getrennt und um R Trägerfrequenzen zwischen zwei Symbolen getrennt sind, wobei diese Trägerfrequenzen aufeinander folgende Referenzträgerfrequenzen umfassen und wobei M und L größer oder gleich 2 und R = (L + 1)/M sind;

   - Umgruppierung (771) der extrahierten Referenzkoeffizienten, um einen fiktiven Synchronisierungskoeffizienten zu bilden, welcher um einen Faktor R unterabgetastet wird;

   - umgekehrte Fourier Transformation (773) des fiktiven Synchronisierungssymbols, um eine Schätzung der Impulsantwort $h_n$ zu erhalten, die sich über eine Zeitdauer $t_s/R$ erstreckt, wobei $t_s$ die nützliche Dauer eines Symbols ist.

3. Verfahren nach einem der Ansprüche 1 oder 2, **dadurch gekennzeichnet, dass** die Analyse der Schätzung der Impulsantwort $h_n$ die folgenden Schritte umfasst:

   - Suche eines Impulses (41, 51, 53), der für die erste Wegstrecke des Signals im Sendekanal repräsentativ ist;

   - Analyse dieses für die erste Wegstrecke repräsentativen Impulses, um festzustellen, ob es sich um ein Echo (53) oder ein Vorecho (51) handelt,

   und dadurch, dass der Schritt zum Feststellen des Anfangs des nützlichen Teils eines jeden der Symbole das Positionieren eines Auswahlzeitfensters (73) auf dem empfangenen Signal steuert, um den für die erste Wegstrecke repräsentativen Impuls in etwa am Zeitpunkt $t = 0$ innerhalb der Schätzung der Impulsantwort $h_n$ zu positionieren, wobei das Fenster verzögert werden muss, wenn es sich um ein Echo bzw. vorgezogen werden muss, wenn es sich um ein Vorecho handelt.

4. Verfahren nach Anspruch 3, **dadurch gekennzeichnet, dass** der Zeitbereich [0, $t_{max}$], über welchen sich die Schätzung der Impulsantwort $h_n$ erstreckt, in zwei Felder aufgeteilt ist:

   - ein erstes, als vorauseilendes Feld bezeichnetes Feld (43), das sich vom Zeitpunkt 0 bis zu einem Zeitpunkt $t_{lim}$ erstreckt und

   - ein zweites, als verzögertes Feld bezeichnetes Feld (44), das sich vom Zeitpunkt $t_{lim}$ bis zum Zeitpunkt $t_{max}$ erstreckt,

   wobei der erste, für die erste Wegstrecke repräsentative Impuls, als Echo betrachtet wird, wenn es sich im vorauseilenden Feld befindet und als Vorecho, wenn es sich im verzögerten Feld befindet.

5. Verfahren nach Anspruch 4, **dadurch gekennzeichnet, dass** $t_{lim}$ größer oder gleich der Zeitdauer $\Delta$ des Schutzintervalls ist, das vor dem nützlichen Teil eines jeden der besagten Symbole liegt.

6. Verfahren nach einem der Ansprüche 1 bis 5, **dadurch gekennzeichnet, dass** es eine Phase der Grobsynchronisierung (76) umfasst, die parallel zu der Feinsynchronisierungsphase eingesetzt wird, die eine Korrelationsphase des Schutzintervalls umfasst, darin bestehend, dass ein Korrelationsscheitelpunkt zwischen dem Inhalt eines vor dem nützlichen Teil eines jeden der besagten Symbole und dem Ende des nützlichen Teils dieses Symbols liegenden Schutzintervalls gesucht wird, um die Dauer des Symbols festzustellen.

7. Verfahren nach einem der Ansprüche 4 oder 6, **dadurch gekennzeichnet, dass** es einen Schritt zum Unterscheiden zwischen einem langen Echo und einem Vorecho umfasst, wenn der besagte, für die erste Wegstrecke repräsentative Impuls sich in dem verzögerten Feld befindet, durch Analyse des Maßes ($63_i$) der Korrelation des Schutzintervalls, wobei das Verfahren darin besteht, die Zahl der oberhalb eines Entscheidungsschwellenwertes (66) liegenden Abtastwerte des Maßes der Korrelation festzustellen, wobei der für die erste Wegstrecke repräsentative Impuls als langes Echo betrachtet wird, wenn die Zahl der Abtastwerte größer als ein vorgegebener Wert ist.

8. Verfahren nach Anspruch 7, **dadurch gekennzeichnet, dass** der Entscheidungsschwellenwert (66) in etwa proportional zur kleineren Amplitude unter den zwei Amplituden ist, die dem größeren Impuls eines jeden der Felder, das "vorauseilende" Feld und das "verzögerte" Feld, entsprechen.

9. Vorrichtung zur zeitlichen Synchronisation in einem Empfänger für ein Mehrfachträgersignal, bestehend aus einer Folge von Symbolen, die jeweils von einer Vielzahl von Trägerfrequenzen gebildet sind, von denen eine jede durch einen Modulationskoeffizient moduliert wird,

wobei einige dieser Trägerfrequenzen, deren Position im Zeit-Frequenz-Raum vom Empfänger bekannt ist, Referenzträgerfrequenzen sind, die einen Referenzkoeffizienten tragen, dessen Wert vom Empfänger bekannt ist,

**dadurch gekennzeichnet, dass** sie Feinsynchronisierungsmittel aufweist, die folgendes umfassen:

- Mittel (773) zum Schätzen der Impulsantwort $h_n$ des Sendekanals für das besagte Signal, ausgehend von Referenzkoeffizienten, die mindestens zu zwei empfangenen Symbolen gehören;

- Mittel (75) zum Feststellen des Anfangs des nützlichen Teils eines jeden dieser Symbole durch Analyse der Schätzung der Impulsantwort $h_n$

Fig. 1

Fig. 2

Fig. 3

$\hat{h}(n)$

42

41

45

$\dfrac{N}{R}-1$

n

0

43

44

temps

0

$\dfrac{ts}{R}$

Fig. 4

$\hat{h}(n)$

Champ "en avance"

champ "en retard"

Pré-écho

51

52

n

0

$\dfrac{ts}{4}$

$\dfrac{ts}{3}$

Fig. 5A

$\hat{h}(n)$

Champ "en avance"

champ "en retard"

échos

53

54

n

0

$\dfrac{ts}{4}$

$\dfrac{ts}{3}$

Fig. 5B

Fig. 6A

Fig. 6B

Echantillonnage — 71

X(t)

Hs

FFT N points — 72

$Y_{j,k}$

fenêtre FFT — 73

Retard ts — 762

Corrélateur + Accumulateur sommateur — 761

76

Extraction des échantillons correspondant à des porteuses de référence — 771

77

$Y_k$

$\frac{C_k^*}{|C_k|^2}$

⊗ — 772

$\hat{H}_k$

FFT$^{-1}$ N/R points — 775

$\hat{h}_n$

Analyse de $\Gamma_x$ et de $\hat{h}_n$ par DSP — 75

$\Gamma_x$

Asservissement horloge Hs

Horloge Hs — 74

Fig. 7